# EUROPEAN PATENT SPECIFICATION

(11) **EP 1 732 181 B1**
(45) Date of publication and mention of the grant of the patent: **02.01.2008**
(21) Application number: 06010972.5
(22) Date of filing: 29.05.2006
(51) Int. Cl.: B62D 15/02

(54) **Connecting structure of rotary connector and steering angle sensor**
Verbindungsanordnung eines Drehverbinders mir Steuerwinkelsensor
Dispositif de connexion d'un connecteur rotatif ayant un capteur d'angles

(30) Priority: 06.06.2005 JP 2005165648
(43) Date of publication of application: 13.12.2006
(73) Proprietor: ALPS ELECTRIC CO., LTD., Tokyo 145-8501 (JP)
(72) Inventor: Araki, Junji, Ota-ku Tokyo 145-8501 (JP)
(74) Representative: Klunker . Schmitt-Nilson . Hirsch

(56) References cited:
- EP-A- 0 913 319
- DE-A1- 19 755 094
- PATENT ABSTRACTS OF JAPAN vol. 2000, no. 16, 8 May 2001 (2001-05-08) & JP 2001 026273 A (TOKAI RIKA), 30 January 2001 (2001-01-30)

## Description

### BACKGROUND OF THE INVENTION

### 1. Field of the Invention

The present invention relates to a connecting structure of a rotary connector built in a steering apparatus of a vehicle, used as an electrical connecting means for an air bag system or the like, and a steering angle sensor serving as detecting means for detecting information about rotation of a steering wheel.

### 2. Description of the Related Art

A rotary connector generally includes a stator member, a rotor member rotatably connected to the stator member, a flexible cable held and wound in an annular space defined between the stator member and the rotor member, and as the rotor member is rotated in accordance with the steering wheel, the flexible cable is wound or unwound in the annular space. Here, a relatively large clearance (in an in-plane direction orthogonal to a rotation axis) is formed between the rotor member and the stator member of the rotary connector; accordingly, the rotor member can be stably rotated in accordance with the steering wheel. In the meantime, a steering angle sensor includes a fixing member, a rotor member having a code plate that is rotatably connected to the fixing member, a photo-interrupter accommodated in the fixing member. As the rotor member and the code plate are rotated in accordance with the steering wheel, the photo-interrupter outputs detection signals of the rotated amount. Here, when the rotor member of the steering angle sensor is supported, a small clearance with respect to the fixing member should be provided; accordingly, this prevents a backlash from occurring in the rotation direction and the axis line direction of the code plate integrated with the rotor member.

Conventionally, a technique has been disclosed in which a steering angle sensor unit includes a rotary connector and a steering angle sensor, as the steering angle sensor unit is built in a steering apparatus, the rotary connector is used as the electrical connecting means for an air bag system mounted in the steering wheel, and the steering angle sensor is used as the detecting means for detecting information about the rotation of the steering wheel EP 0 913 319 A2 and Japanese-family member JP 11-135 221 A).

According to the related art, protrusions are formed on one rotor member (first rotor member) of the rotary connector of another rotor member (second rotor member) of the steering angle sensor, and an elongated hole is formed on the other rotor member in a radial direction. In the case of making the rotary connector and the steering angle sensor into one unit, as the protrusion is engaged with the elongated hole in a state in which a coil spring is interposed between the first and second rotor members, the first and second rotor members.are concentrically connected to each other, and a fixing member of the steering angle sensor is screwed to a stator member of the rotary connector. When the unit is built in the steering apparatus, after the first and second rotor members are inserted through a steering shaft, the steering wheel is connected to the first rotor member of the rotary connector located at an upper end thereof.

When an operator rotates the steering wheel, the first rotor member of the rotary connector and the second rotor member of the steering angle sensor integrally rotate; therefore, the flexible cable of the rotary connector is wound and unwound in an annular space, and the steering angle sensor detects the information about the rotation of the steering wheel. In this case, the first rotor member of the rotary connector requiring a relatively large clearance is connected to the second rotor member of the steering angle sensor requiring a minimum clearance, in a state in which the protrusion provided in one rotor member is engaged with the elongated hole formed in the other rotor member; accordingly, the first rotor member and the second rotor member can smoothly rotate. In addition, since the coil spring interposed between the first rotor member and the second rotor member urges the first rotor member and the second rotor member in such a direction that they separate from each other, it is possible to suppress a backlash in an axis line direction of the code plate integrated with the second rotor member of the steering angle sensor, and thus stable detection signals can be obtained from the steering angle sensor.

As describe above, in the connecting structure of the rotary connector and the steering angle sensor according to the related art, since the coil spring is interposed between the rotor member of the rotary connector and the rotor member of the steering angle sensor, the coil spring prevents a backlash from occurring in an axis line direction between both of the rotor members, and thus stable detection signals can be obtained. However, with the coil spring interposed between the rotor members, both of the rotor members should be connected to each other; consequently, operability in assembling deteriorates when the rotary connector and the steering angle sensor are formed as one unit, and noise such as a so called spring noise, is generated due to vibration of the coil spring while driving the vehicle.

In addition, according to the related art, the rotor members of the steering angle sensor are formed of two separate members having a collar portion on both top and bottom ends thereof, a rotor member is formed by integrating both separate members with the code plate interposed therebetween, so that the rotor member is rotatably supported in each guide hole of an upper cover and a lower cover of the fixing member. Therefore, at least three members (code plate and the pair of separate members) are required to form an integrated product including the code plate and the rotor member, which leads to an increase in the number of parts of the steering angle sensor, thereby increasing cost.

### SUMMARY OF THE INVENTION

The present invention has been finalized in view of the drawbacks inherent in the related art, and it is an object of the present invention to provide a connecting structure of a rotary connector and a steering angle sensor capable of reducing noise.

Subject-matter of the invention is the connecting structure indicated in claim 1. A connecting structure having the features of the preamble of claim 1 is known from EP 0 913 319 A2.

In order to solve the above-described problems, according to a further aspect, there is provided a connecting structure of a rotary connector and a steering angle sensor which includes: a first rotor member having a hollow shaft shape and rotating in accordance with a steering wheel; a rotary connector in which the first rotor member is rotatably supported by a stator member; a second rotor member in which a code plate is provided at an outer peripheral surface of a hollow shaft portion; a steering angle sensor in which the second rotor member is rotatably supported by a fixing member; and a disk-shaped intermediate elastic member which is interposed between the first rotor member and the second rotor member in a clamped state. A plurality of engaging notched portions or engaging protrusions is provided in the intermediate elastic member. The rotation of the first rotor member is transferred to the second rotor member via the intermediate elastic member by forming connecting protrusions capable of being engaged with the engaging notched portions or connecting notched portions capable of being engaged with the engaging protrusions in the first and second rotor members. As at least some of the plurality of engaging notched portions or the plurality of connecting notched portions are formed in an elongated hole shape, the connecting protrusions or engaging protrusions are engaged with the engaging notched portions or connecting notched portions in a state movable in a radial direction of the intermediate elastic member.

According to the solving means of the invention, the intermediate elastic member is interposed between the first rotor member and the second rotor member, the intermediate member urges the first rotor member and the second rotor member in such a direction that they separate from each other, and both rotor members are positioned in the rotation direction as the connecting protrusions (or connecting notched portions) of the first and second rotor members are engaged with the engaging notched portions (or engaging protrusions) of the intermediate elastic member. Therefore, a backlash can be suppressed between both of the rotor members, and thus stable detection signals can be obtained from the steering angle sensor. In addition, since it is unnecessary to provide a coil spring for preventing a backlash, vibration noise, a so called spring noise, can be reduced. Therefore, improvements can be achieved in terms of noise reduction. Further, as at least some of the plurality of engaging notched portions (or connecting notched portions) are formed in an elongated hole shape, the corresponding connecting protrusions (or engaging protrusions) are engaged with the engaging notched portions (or connecting notched portions) in a state movable in a radial direction of the intermediate elastic member. For this reason, the central axis of the first rotor member is allowed to deviate from the central axis of the second rotor member, and the rotary connector which requires a relatively large clearance is connected to a highly accurate steering angle sensor, and thus both of the rotor members can be smoothly rotated, respectively. Furthermore, since the intermediate elastic member regulates the second rotor member of the steering angle sensor in the axis line direction with respect to the fixing member, it is possible to easily realize the structure in which the second'rotor member is rotatably supported by the fixing member.

In the above-described structure, all of the engaging notched portions and engaging protrusions may be formed in the intermediate elastic member. However, it is preferable in terms of a life span to use a connecting structure in which the connecting protrusions provided in the first and second rotor members are inserted in the engaging notched portions provided in the intermediate elastic member to make engagement. In this case, preferably, two pairs of engaging notched portions are formed at 180-degree intervals, each, in a circumferential direction, and a line connecting the pair of engaging notched portions to be engaged with the connecting protrusions of the first rotor member is orthogonal to a line connecting the pair of engaging notched portions to be engaged with the connecting protrusions of the second rotor member; therefore, Oldham's coupling (slider coupling) is obtained in which the first and second rotor members are connected to each other by the intermediate elastic member. For this reason, it is possible to realize a connecting structure in which the central axis of the first rotor member is allowed to deviate from the central axis of the second rotor member, and a backlash in the rotation direction is suppressed. In addition, preferably, the pair of engaging notched portions to be engaged with the connecting protrusions of the first rotor member is formed in an elongated hole shape; therefore, it is possible to easily ensure a required clearance in the rotary connector. In addition, preferably, one of the pair of engaging notched portions is formed between two elastic arms, the two elastic arms elastically clamping the connecting protrusion from the circumferential direction of the intermediate elastic member; therefore, it is possible to reliably prevent a backlash in the rotation direction.

In the above-described structure, preferably, micro spikes are formed on a plurality of places of the top and bottom surfaces of the intermediate elastic member, the micro spikes are in point-contact with the first rotor. member or the second rotor member; therefore, intermediate elastic member is prevented from being adhere onto both of the rotor members, and thus the intermediate elastic member is prevented from hindering a relative movement of both of the rotor members in the radial direction.

In addition, in the above-described structure, preferably, the second rotor member is formed of a synthetic resin molding product in which the code plate is integrated to the outer peripheral surface of the hollow shaft portion. In this case, since the intermediate elastic member regulates the second rotor member of the steering angle sensor in the axis line direction with respect to the fixing member, it is possible to reduce the number of parts and the man-hour for assembling by using the second rotor member formed by integrating the code plate to the outer peripheral surface of the hollow shaft portion.

### BRIEF DESCRIPTION OF THE DRAWINGS

Fig. 1 is a cross-sectional view illustrating a connecting unit of a rotary connector and a steering angle sensor according to an embodiment of the present invention;
Fig. 2 is an exploded perspective view of the connecting unit;
Fig. 3 is a plan view of an intermediate elastic member provided in the connecting unit; and
Fig. 4 is a cross-sectional view of the intermediate elastic member.

### DESCRIPTION OF THE PREFERRED EMBODIMENT

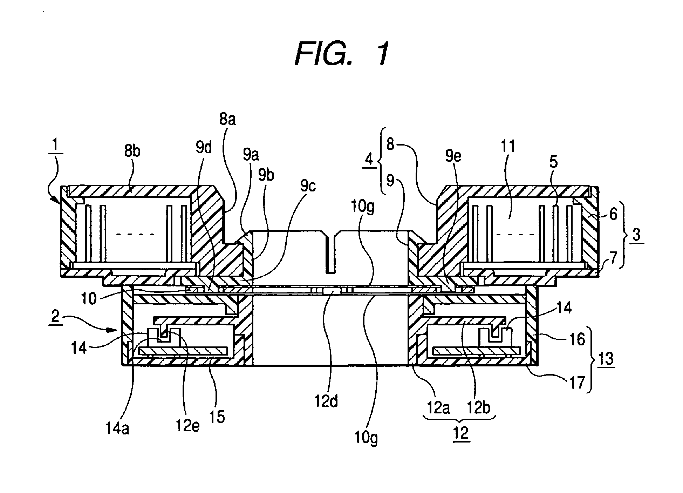

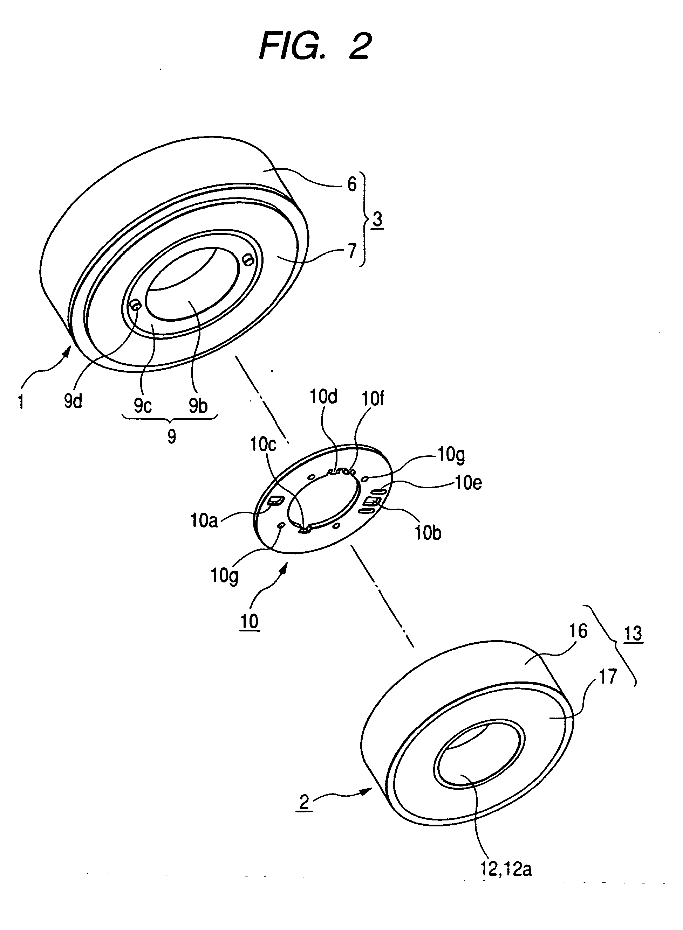

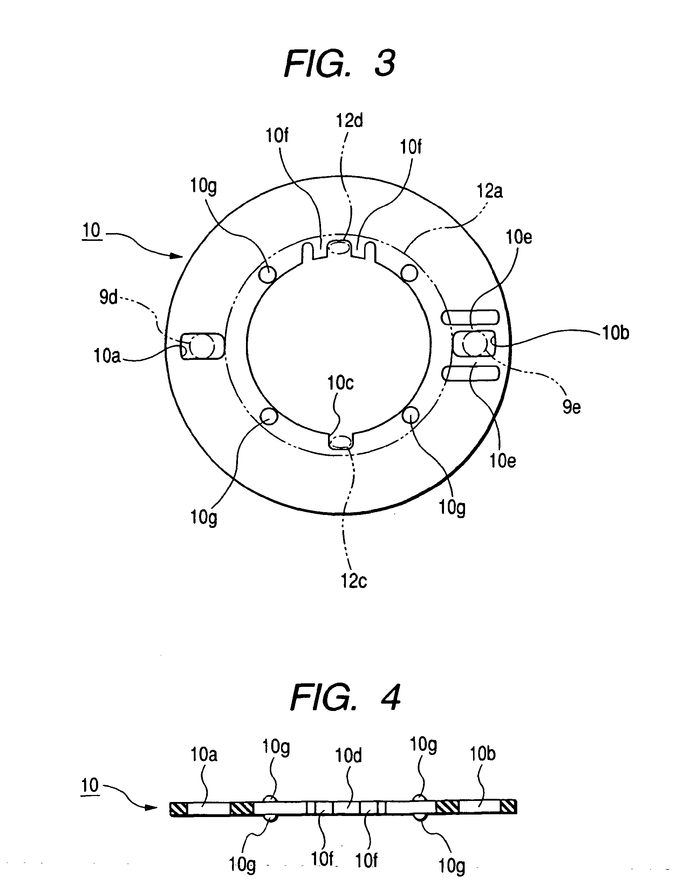

A preferred embodiment of the present invention will be described with reference to the accompanying drawings. Fig. 1 is a cross-sectional view illustrating a connecting unit of a rotary connector and a steering angle sensor according to the embodiment of the present invention. Fig. 2 is an exploded perspective view of the connecting unit. Fig. 3 is a plan view of an intermediate elastic member provided in the connecting unit. Fig. 4 is a cross-sectional view of the intermediate elastic member.

The connecting unit according to the embodiment is composed of a rotary connector 1, a steering angle sensor 2, and an intermediate elastic member 10. To be described below, the rotary connector 1 and the steering angle sensor 2 are integrally built in a steering apparatus of a vehicle in which they are vertically laid on each other with the intermediate elastic member 10 interposed therebetween.

The rotary connector 1 is used as the electrical connecting means for an air bag system mounted on a steering wheel. The rotary connector 1 includes: a stator housing 3 serving as a stator member; a rotor housing 4 serving as a first rotor member having a hollow shaft structure; a flexible cable 5 which is wound and held in an annular space 11 formed between the stator housing 3 and the rotor housing 4. The stator housing 3 is composed of a cylindrical outer casing 6, a disk-shaped bottom plate 7 fixed to the bottom of the outer casing 6, and the outer casing 6 and the bottom plate 7 are formed by molding a synthetic resin. The rotor housing 4 is composed of an upper rotor 8 and a lower rotor 9, the upper rotor 8 is formed by extending a disk-shaped upper plate portion 8b in an outward direction from an upper end of a cylindrical inner portion 8a, and the lower rotor 9 is combined to the inner portion 8a of the upper rotor 8 in a snap-in relationship so as to rotate integrally with the upper rotor 8. The upper rotor 8 and the lower rotor 9 are formed by molding a synthetic resin. In addition, the lower rotor 9 includes a hollow portion 9b which is provided with a snap click 9a on an upper end thereof, a disk-shaped lower plate portion 9c extending in the outward direction from the lower end of the hollow portion 9b. Connecting protrusions 9d and 9e are formed at two places of the bottom surface of the lower plate portion 9c to protrude downward at a 180-degree interval in a circumferential direction.

The rotor housing 4 of the rotary connector 1 is constituted by integrating the upper rotor 8 and the lower rotor 9, as the snap click 9a of the hollow portion 9b is combined with an inner peripheral wall of the inner portion 8a in a snap-in relationship. As shown in Fig. 1, the rotor housing 4 is rotatably supported by the stator housing 3, in a state in which an outer edge of the upper plate portion 8b slides on the upper end of the outer casing 6, and an outer edge of the lower plate portion 9c slides on the bottom surface of the bottom plate 7. The annular space 11 is formed by the outer casing 6 of the stator housing 3 and the upper rotor 8 of the rotor housing 4. The flexible cable 5 is wound, for example, in a spiral form (or in a spiral form whose wounding direction is reversed on the way) in the annular space 11. Both ends of the flexible cable 5 are led outside via a direct connector (not shown) or the like, after both ends thereof are fixed to the outer casing 6 and the inner portion 8a of the upper rotor 8.

The steering angle sensor 2 is used as the detecting means for detecting information about the rotation of the steering wheel. The steering angle sensor 2 includes a rotary member 12 serving as a second rotor member, a fixing member 13 supporting the rotary member 12 to be rotatable, a circuit board 15 built in the fixing member 13, and a photo-interrupter 14 is mounted on the circuit board 15. The rotary member 12 is composed of a cylindrical hollow shaft portion 12a, a disk-shaped code plate 12b protruding outward from the vicinity of the center of the outer peripheral surface of the hollow shaft portion 12a, and the hollow shaft portion 12a and the code plate 12b are integrally formed by molding a synthetic resin. In addition, connecting protrusions 12c and 12d (refer to Fig. 3) are formed at two places of an upper end surface of the hollow shaft portion 12a to protrude upward at a 180-degree interval in a circumferential direction, and a line connecting the pair of connecting protrusions 12c and 12d is orthogonal to a line connecting the pair of connecting protrusions 9d and 9e protrudingly formed to a lower end surface (the bottom surface of the lower rotor 9) of the rotor housing 4. The fixing member 13 is formed by integrating an upper cover 16 and a lower cover 17, and the upper cover 16 and the lower cover 17 are formed by molding a synthetic resin. The photo-interrupter 14 is an optical element including a light emitting element and a light receiving element, and the light emitting element faces the light receiving element with a concave portion 14a interposed therebetween. A plurality of light-shielding portions 12e are formed on the code plate 12b of the rotary member 12 at predetermined intervals in the circumferential direction, and the light-shielding portions 12e intrude into the concave portion 14a of the photo-interrupter 14 in accordance with the rotation of the rotary member 12. Accordingly, light traveling to the light receiving element from.the light emitting element is blocked inside the concave portion 14a, and thus low and high signals are alternately output. Therefore, information about the rotation of the rotation member 12 can be detected on the basis of the output signals.

The intermediate elastic member 10 is disk-shaped or ring-shaped member made of elastomer materials, such as rubber, polyesters, and polyamides. The intermediate elastic member 10 is interposed between the lower rotor 9 (lower plate portion 9c) and the hollow shaft portion 12a of the rotary member 12 in a clamped state. The intermediate elastic member 10 has a pair of engaging notched portions 10a and 10b, and a pair of engaging notched portions 10c and 10d. The pair of engaging notched portions 10a and 10b is formed of a hole elongated in a radial direction at a 180-degree interval in the circumferential direction. The pair of engaging notched portions 10c and 10d are formed at a 180-degree interval in the circumferential direction to serve as a groove for the innermost peripheral portion. As shown in Fig. 3, a line connecting the pair of engaging notched portions 10a and 10b is orthogonal to a line connecting the pair of engaging notched portions 10c and 10d. One engaging notched portion 10b formed in an elongated hole is formed between two elastic arms 10e and 10e, one engaging notched portion 10d formed in a groove shape is formed between two elastic arms 10f and 10f. The intermediate elastic member 10 is engaged with the lower rotor 9 as the connecting protrusions 9d and 9e are inserted in the engaging notched portions 10a and 10b having the elongated hole shape, respectively, and the intermediate elastic member 10 is engaged with the rotary member 12 as the connecting protrusions 12c and 12d are inserted in the engaging notched portions 10c and 10d having the groove shape. Here, the connecting protrusion 9d is tightly fit with the engaging notched portion 10a; on the other hand, the connecting protrusion 9e inserted in the engaging notched portion 10b is elastically held between the two elastic arms 10e and 10e. In the same manner, the connecting protrusion 12c is tightly fit with the engaging notched portion 10c; on the other hand, the connecting protrusion 12d inserted in the engaging notched portion 10d is elastically held between the two elastic arms 10f and 10f. In addition, four micro spikes 10g are formed on the top and bottom surfaces of the intermediate elastic member 10 at equal intervals, each micro spike 10g on the top surface is in point-contact with the lower end surface of the lower rotor 9, and each micro spike 10g on the bottom surface is in point-contact with the upper end surface of the hollow shaft portion 12a.

During assembling, the rotor housing 4 of the rotary connector 1 is connected with the rotary member 12 of the steering angle sensor 2 with the intermediate elastic member 10 interposed therebetween, and then the upper cover 16 is fixed with the bottom plate 7 by means of screw fixing and snap-in fitting. Therefore, the stator housing 3 of the rotary connector 1 is integrated with the fixing member 13 of the steering angle sensor 2. Here, as shown in Fig. 1, as for the intermediate elastic member 10 interposed between the lower rotor 9 and the hollow shaft portion 12a, when the stator housing 3 and the fixing member 13 are fixedly connected to each other, the micro spikes 10g on both sides are pressure-contacted with the lower end surface of the lower rotor 9 and the upper end surface of the hollow shaft portion 12a, respectively, and the intermediate elastic member 10 is fit between the lower rotor 9 and the hollow shaft portion 12a. Accordingly, since resilience of the intermediate elastic member 10 in a clamped state urges the lower rotor 9 and the hollow shaft portion 12a in such a direction that they separate from each other, a backlash in an axis line direction rarely occurs between the lower rotor 9 and the hollow shaft portion 12a that are connected to each other by the intermediate elastic member 10. In addition, the connecting protrusion 9d is tightly fit with the engaging notched portion 10a, and the connecting protrusion 9e inside the engaging notched portion 10b is elastically held between the elastic arms 10e and 10e in the circumferential direction of the intermediate elastic member 10. Therefore, the lower rotor 9 rarely backlashes in a rotating direction with respect to the intermediate elastic member 10. In the same manner, the connecting protrusion 12c is tightly fit with the engaging notched portion 10c, and the connecting protrusion 12d inside the engaging notched portion 10d is elastically held between the elastic arms 10f and 10f in the circumferential direction of the intermediate elastic member 10. Therefore, the hollow shaft portion 12a rarely backlashes in the rotating direction with respect to the intermediate elastic member 10. As a result, it is possible to reliably transfer the rotation of the lower rotor 9 to the hollow shaft portion 12a by the intermediate elastic member 10. However, since the connecting protrusions 9d and 9e of the lower rotor 9 are engaged with the engaging notched portions 10a and 10b having the elongated hole shape, the rotor 9 can move slightly in the radial direction of the intermediate elastic member 10.

In this way, the connecting unit of the rotary connector 1 and the steering angle sensor 2 can be integrally built in the steering apparatus of the vehicle as they are as long as they are configured to be vertically laid on each other. While assembling the connecting unit into the steering apparatus, preferably, the sheering shaft is inserted through a central through hole of the rotary member 12 and a central through hole of the rotor housing 4, and then the stator housing 3 of the rotary connector 1 and the fixing member 13 of the steering angle sensor 2 are fixed to a base member, such as a steering column, and a connecting pin (not shown) erected from the upper rotor 8 of the rotary connector 1 is connected to the steering wheel.

When an operator turns the steering wheel clockwise or counter-clockwise while using it, the rotor housing 4 and the rotary member 12 integrally rotate along with the rotation of the steering wheel, so that the rotary connector 1 and the steering angle sensor 2 respectively operates. In other words, as for the rotary connector 1, as the rotor housing 4 rotates, the flexible cable 5 is wound or rewound; as for the steering angle sensor 2, as the rotary member 12 having the code plate 12b rotates, the photo-interrupter 14 outputs detection signals of the rotated amount.

As described above, in the connecting structure of the rotary connector 1 and the steering angle sensor 2 according to the present embodiment, the intermediate elastic member 10 is interposed between the lower rotor 9 of the rotor housing 4 and the hollow shaft portion 12a of the rotary member 12, the intermediate member 10 urges the lower rotor 9 and the hollow shaft portion 12a in such a direction that they separate from each other, and the rotation of the lower rotor 9 is reliably transferred to the hollow shaft portion 12a, and a backlash does not occur in either the rotation direction or the axis line direction between the lower rotor 9 and the hollow shaft portion 12a. Therefore, since the rotor housing 4 and the rotary member 12 are connected to each other while suppressing a backlash, stable detection signals can be obtained from the steering angle sensor 2. In addition, since it is unnecessary to provide a coil spring for preventing a backlash, vibration noise, so called spring noise, can be reduced. Therefore, improvements can be achieved in terms of noise reduction and assembling operability. Moreover, since the intermediate elastic member 10 regulates the rotary member 12 in the axis line direction with respect to the fixing member 13, it is possible to easily realize the structure in which the rotary member 12 is rotatably supported by the fixing member 13, while reducing the number of parts and the man-hour for assembling by using the rotary member 12 formed by integrating the hollow shaft portion 12a and the code plate 12b that is protrudingly formed to the outer peripheral surface of the hollow shaft portion 12a.

In the present embodiment, the lower rotor 9 can move in the radial direction of the intermediate elastic member 10 as the connecting protrusions 9d and 9e are engaged with the engaging notched portions 10a and 10b having the elongated hole shape. Further, the line connecting the pair of engaging notched portions 10a and 10b is orthogonal to the line connecting the pair of engaging notched portions 10c and 10d. Therefore, like Oldham's coupling (slider coupling), the rotor 9 and the hollow shaft portion 12a are connected to each other by the intermediate elastic member 10. For this reason, the central axis of the lower rotor 9 is allowed to deviate from the central axis of the hollow shaft portion 12a, and the rotary connector 1 which requires a relatively large clearance is connected to a highly accurate steering angle sensor 2, and thus the rotor housing 4 and the rotary member 12 can be smoothly rotated, respectively.

In addition, according to the present embodiment, in order to prevent the intermediate elastic member 10 from being adhere onto the lower rotor 9 or the hollow shaft portion 12a and thereby generating an excessive friction, the micro spikes 10g are protrudingly formed on the top and bottom surfaces of the intermediate elastic member 10, such that each micro spike 10g on the top and bottom surfaces is in point-contact with the lower end surface of the lower rotor 9 and the upper end surface of the hollow shaft portion 12a. Therefore, the intermediate elastic member 10 is prevented from hindering a relative movement of the rotor housing 4 and the rotary member 12 in the radial direction, and thus it is possible to always perform a stable operation.

In addition, according to the present embodiment, even though the connecting protrusions 9d and 9e of the rotor housing and the connecting protrusions 12c and 12d of the rotary member 12 are inserted in the engaging notched portions 10a to 10d of the intermediate elastic member 10, it is possible to use a connecting structure in which an engaging protrusion provided in the intermediate elastic member 10 is inserted in a connecting notched portion provided in the rotor housing 4 or the rotary member 12 so as to make engagement.

According the solving means of the invention, in the connecting structure of a rotary connector and a steering angle sensor, the intermediate elastic member is interposed between the first rotor member and the second rotor member, the intermediate member urges the first rotor member and the second rotor member in such a direction that they separate from each other, and both rotor members are positioned in the rotation direction as the connecting protrusions (or connecting notched portions) of the first and second rotor members are engaged with the engaging notched portions (or engaging protrusions) of the intermediate elastic member. Therefore, a backlash can be suppressed between both of the rotor members, and thus stable detection signals can be obtained from the steering angle sensor. In addition, since it is unnecessary to provide a coil spring for preventing a backlash, vibration noise, a so called spring noise, can be reduced. Therefore, improvements can be achieved in terms of noise reduction and assembling operability. Since the central axis of the first rotor member is allowed to deviate from the central axis of the second rotor member, the rotary connector which requires a relatively large clearance is connected to a highly accurate steering angle sensor, and thus both of the rotor members can be smoothly rotated, respectively.

## Claims

1. A connecting structure of a rotary connector (1) and a steering angle sensor (2), comprising:
a rotary connector (1) in which a first rotor member (4) is rotatably supported by a stator member (3), the first rotor member (4) having a hollow shaft shape and rotating in accordance with a steering wheel; and
a steering angle sensor (2) in which a second rotor member (12) is rotatably supported by a fixing member (13), the second rotor member (12) having a code plate (12b) which is provided on an outer peripheral surface of a hollow shaft portion (12a); the connecting structure being **characterized by**
a disk-shaped intermediate elastic member (10) which is interposed between the first rotor member (4) and the second rotor member (12) in a clamped state,
wherein a plurality of engaging notched portions (10a;10b;10c;10d) or engaging protrusions are provided in the intermediate elastic member (10),
the rotation of the first rotor member (4) is transferred to the second rotor member (12) by the intermediate elastic member (10) by providing connecting protrusions (9d;9e;12c;12d) capable of being engaged with the engaging notched portions or by providing connecting notched portions capable of being engaged with the engaging protrusions in the first and second rotor members (4;12), and
at least some of the plurality of engaging notched portions (10a; 10b; 10c; 10d) or the plurality of connecting notched portions are formed in an elongated hole shape such that the connecting protrusions (9d; 9e; 12c; 12d) or the engaging protrusions are engaged with the engaging notched portions (10a; 10b; 10c; 10d) or the connecting notched portions so as to be movable in a radial direction of the intermediate elastic member (12).

2. The connecting structure of a rotary connector (1) and a steering angle sensor (2) according to claim 1,
wherein two pairs of the engaging notched portions (10a;10b;10c;10d) are formed at 180-degree intervals in a circumferential direction, and
a line that connects the pair of the engaging notched portions (10a,10b) to be engaged with the connecting protrusions (9d, 9e) of the first rotor member (4) is orthogonal to a line that connects the pair of the engaging notched portions (10c,10d) to be engaged with the connecting protrusions (12c,12d) of the second rotor member (12).

3. The connecting structure of a rotary connector and a steering angle sensor according to claim 2,
wherein the pair of engaging notched portions (10a, 10b) to be engaged with the connecting protrusions (9d, 9e) of the first rotor member (4) is formed in an elongated hole shape.

4. The connecting structure of a rotary connector and a steering angle sensor according to claim 2 or 3,
wherein one (10b; 10d) of the pair of engaging notched portions (10a, 10b; 10c, 10d) is formed between two elastic arms (10e; 10f), the two elastic arms elastically clamping the connecting protrusion (9e; 12d) from the circumferential direction of the intermediate elastic member (10).

5. The connecting structure of a rotary connector and a steering angle sensor according to any of claims 1 to 4,
wherein a plurality of micro spikes (10g) are formed on the top and bottom surfaces of the intermediate elastic member (10), the micro spikes (10g) being in point-contact with the first rotor member (4) or the second rotor member (12).

6. The connecting structure of a rotary connector and a steering angle sensor according to any of claims 1 to 5,
wherein the second rotor member (12) is formed of a synthetic resin molding product in which the code plate (12b) is integrated to the outer peripheral surface of the hollow shaft portion (12a).

## Patentansprüche

1. Verbindungskonstruktion eines Drehverbinders (1) und eines Lenkwinkelsensors (2), aufweisend:
einen Drehverbinder (1), bei dem ein erstes Rotorelement (4) durch ein Statorelement (3) drehbar abgestützt ist, wobei das erste Rotorelement (4) eine Hohlwellenform aufweist und sich nach Maßgabe eines Lenkrads dreht; und
einen Lenkwinkelsensor (2), bei dem ein zweites Rotorelement (12) durch ein Festlegeelement (13) drehbar abgestützt ist, wobei das zweite Rotorelement (12) eine Codeplatte (12b) aufweist, die an einer Außenumfangsfläche eines Hohlwellenbereichs (12a) vorgesehen ist;
wobei die Verbindungskonstruktion **gekennzeichnet ist durch**:
ein scheibenförmiges zwischengeordnetes elastisches Element (10), das in einem eingeklemmten Zustand zwischen dem ersten Rotorelement (4) und
dem zweiten Rotorelement (12) angeordnet ist,
wobei eine Mehrzahl von Eingriffsaussparungsbereichen (10a; 10b; 10c; 10d) oder Eingriffsvorsprüngen an dem zwischengeordneten elastischen Element (10) vorhanden ist,
wobei die Rotationsbewegung des ersten Rotorelements (4) **durch** das zwischengeordnete elastische Element (10) auf das zweite Rotorelement (12) übertragen wird, indem an dem ersten und dem zweiten Rotorelement (4; 12) Verbindungsvorsprünge (9d; 9e; 12c; 12d) vorgesehen sind, die sich mit den Eingriffsaussparungsbereichen in Eingriff bringen lassen, oder indem an dem ersten und dem zweiten Rotorelement (4; 12) Verbindungsaussparungsbereiche vorgesehen sind, die sich mit den Eingriffsvorsprüngen in Eingriff bringen lassen,
wobei zumindest einige der mehreren Eingriffsaussparungsbereiche (10a; 10b; 10c; 10d) oder der mehreren Verbindungsaussparungsbereiche mit einer Langloch-Formgebung ausgebildet sind, so das die Verbindungsvorsprünge (9d; 9e; 12e; 12d) oder die Eingriffsvorsprünge mit den Eingriffsaussparungsbereichen (10; 10b; 10c; 10d) bzw. den Verbindungsaussparungsbereichen in derartigem Eingriff stehen, dass sie in Radialrichtung des zwischengeordneten elastischen Elements (12) beweglich sind.

2. Verbindungskonstruktion eines Drehverbinders (1) und eines Lenkwinkelsensors (2) nach Anspruch 1,
wobei zwei Paare von Eingriffsaussparungsbereichen (10a; 10b; 10c; 10d) in Intervallen von 180° in Umfangsrichtung ausgebildet sind,
und wobei eine Linie; die das Paar der Eingriffsaussparungsbereiche (10a, 10b) für den Eingriff mit den Verbindungsvorsprüngen (9d, 9e) des ersten Rotorelements (4) miteinander verbindet, orthogonal zu einer Linie ist, die das Paar der Eingriffsaussparungsbereiche (10c, 10d) für den Eingriff mit den Verbindungsvorsprüngen (12c, 12d) des zweiten Rotorelements (12) miteinander verbindet.

3. Verbindungskonstruktion eines Drehverbinders und eines Lenkwinkelsensors nach Anspruch 2,
wobei das Paar der Eingriffsaussparungsbereiche (10a, 10b) für den Eingriff mit den Verbindungsvorsprüngen (9d, 9e) des ersten Rotorelements (4) mit einer Langloch-Formgebung ausgebildet ist.

4. Verbindungskonstruktion eines Drehverbinders und eines Lenkwinkelsensors nach Anspruch 2 oder 3,
wobei einer (10b; 10d) aus dem Paar von Eingriffsaussparungsbereichen (10a, 10b; 10c, 10d) zwischen zwei elastischen Armen (10e; 10f) ausgebildet ist, wobei die beiden elastischen Arme den Verbindungsvorsprung (9e; 12d) aus der Umfangsrichtung des zwischengeordneten elastischen Elements (10) in elastischer Weise festklemmen.

5. Verbindungskonstruktion eines Drehverbinders und eines Lenkwinkelsensors nach einem der Ansprüche 1 bis 4,
wobei eine Mehrzahl von Mikro-Dornen (10g) an der oberen und der unteren Oberfläche des .zwischengeordneten elastischen Elements (10) ausgebildet ist, wobei die Mikro-Dorne (10g) in Punktberührung mit dem ersten Rotorelement (4) bzw. dem zweiten Rotorelement (12) stehen.

6. Verbindungskonstruktion eines Drehverbinders und eines Lenkwinkelsensors nach einem der Ansprüche 1 bis 5,
wobei das zweite Rotorelement (12) aus einem Kunstharz-Formerzeugnis gebildet ist, bei dem die Codeplatte (12) in integraler Weise mit der Außenumfangsfläche des Hohlwellenbereichs (12a) ausgebildet ist.

## Revendications

1. Dispositif de connexion d'un connecteur rotatif (1) et d'un capteur d'angle de braquage (2), comprenant :
un connecteur rotatif (1) dans lequel un premier élément de rotor (4) est supporté à rotation par un élément de stator (3), le premier élément de rotor (4) ayant la forme d'un axe creux et tournant selon un volant de direction ; et
un capteur d'angle de braquage (2) dans lequel un deuxième élément de rotor (12) est supporté à rotation par un élément de fixation (13), le deuxième élément de rotor (12) comportant un disque codeur (12b) qui est prévu sur une surface périphérique extérieure d'une partie d'axe creux (12a) ;
le dispositif de connexion étant **caractérisé par** :
un élément élastique intermédiaire en forme de disque (10) qui est intercalé entre le premier élément de rotor (4) et le deuxième élément de rotor (12) dans un état pincé,
dans lequel une pluralité de parties d'accrochage découpées (10a ; 10b ; 10c ; 10d) ou de saillies d'accrochage sont prévues dans l'élément élastique intermédiaire (10),
la rotation du premier élément de rotor (4) est transférée au deuxième élément de rotor (12) par l'élément élastique intermédiaire (10) grâce à des saillies d'assemblage (9d ; 9e ; 12c ; 12d) aptes à s'engager dans les parties d'accrochage découpées ou grâce à des parties d'assemblage découpées aptes à coopérer avec les saillies d'accrochage des premier et deuxième éléments de rotor (4 ; 12), et
au moins certaines des parties d'accrochage découpées (10a ; 10b ; 10c ; 10d) ou des parties d'assemblage découpées ont la forme d'un trou oblong, de sorte que les saillies d'assemblage (9d ; 9e ; 12c ; 12d) ou les saillies d'accrochage sont engagées dans les parties d'accrochage découpées (10a ; 10b ; 10c ; 10d) ou les parties d'assemblage découpées de façon mobile dans une direction radiale de l'élément élastique intermédiaire (12).

2. Dispositif de connexion d'un connecteur rotatif (1) et d'un capteur d'angle de braquage (2) selon la revendication 1,
dans lequel deux paires des parties d'accrochage découpées (10a ; 10b ; 10c ; 10d) sont formées à des intervalles de 180 degrés dans le sens de la périphérie, et
une droite qui relie la paire de parties d'accrochage découpées (10a ; 10b) destinées à recevoir les saillies d'assemblage (9d ; 9e) du premier élément de rotor (4) est orthogonale à une droite qui relie la paire de parties d'accrochage découpées (10c; 10d) destinées à recevoir les saillies d'assemblage (12c; 12d) du deuxième élément de rotor (12).

3. Dispositif de connexion d'un connecteur rotatif et d'un capteur d'angle de braquage selon la revendication 2, dans lequel la paire de parties d'accrochage découpées (10a 10b) destinées à recevoir les saillies d'assemblage (9d; 9e) du premier élément de rotor (4) a la forme d'un trou oblong.

4. Dispositif de connexion d'un connecteur rotatif et d'un capteur d'angle de braquage selon la revendication 2 ou 3, dans lequel l'une (10b ; 10d) des paires de parties d'accrochage découpées (10a, 10b ; 10c, 10d) est formée entre deux bras élastiques (10e ; 10f), les deux bras élastiques pinçant de manière élastique la saillie d'assemblage (9e ; 12d) depuis la direction périphérique de l'élément élastique intermédiaire (10).

5. Dispositif de connexion d'un connecteur rotatif et d'un capteur d'angle de braquage selon l'une quelconque des revendications 1 à 4, dans lequel une pluralité de micropointes (10g) sont formées sur les surfaces supérieure et inférieure de l'élément élastique intermédiaire (10), les micropointes (10g) étant en contact ponctuel avec le premier élément de rotor (4) ou le deuxième élément de rotor (12).

6. Dispositif de connexion d'un connecteur rotatif et d'un capteur d'angle de braquage selon l'une quelconque des revendications 1 à 5, dans lequel le deuxième élément de rotor (12) est formé d'un produit moulé en résine synthétique dans lequel le disque codeur (12b) est intégré à la surface périphérique extérieure de la partie d'axe creux (12a).
